# EUROPEAN PATENT SPECIFICATION

(11) **EP 1 816 066 B1**
(45) Date of publication and mention of the grant of the patent: **29.04.2009**
(21) Application number: 06025482.8
(22) Date of filing: 08.12.2006
(51) Int. Cl.: B62M 25/08

(54) **Electrical bicycle shift control device**
Elektrisch gesteuerte Getriebeschalteinrichtung für ein Fahrrad
Actionneur pour transmission de bicyclette commandé électriquement

(30) Priority: 03.02.2006 US 346161
(43) Date of publication of application: 08.08.2007
(73) Proprietor: SHIMANO INC., Osaka 590-8577 (JP)
(72) Inventor: Nakano, Keisuke, Sakai City Osaka 590-8577 (JP)
(74) Representative: Hofmann, Harald

(56) References cited:
- EP-A- 1 473 220
- EP-A- 1 535 830
- EP-A- 1 588 933

## Description

### Field of the Invention

This invention generally relates to a bicycle shift control device. More specifically, the present invention relates to a bicycle shift control device that includes a switch operating member having a rider operating portion that is adjustable relative to a base member of the shift control device.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, control devices for braking and/or shifting have been extensively redesigned in recent years.

In the past, bicycle shifters were mechanically operated devices that were sometimes located near the brake levers of the bicycle. Thus, an operating force was typically applied by one of the rider's fingers to operate a shift control lever which in turn transmitted the operating force to the drive component of a bicycle shifting mechanism by a cable that was fixed at one end to the control lever. More recently, electrical switches have been used instead of mechanical control levers in order to operate the bicycle shifting mechanism. Two examples of electrical shift control devices are disclosed in U.S. Patent No. 6,073,730 and U.S. Patent No. 6,129,580 (both assigned to Shimano, Inc.). These patents disclose a pair of electrical switches that are provided in the side of the bracket body. Another example of this type of electrical shift control device is disclosed in U.S. Patent Application Publication No. 2005/0223840 (assigned to Shimano, Inc.). In this publication, an electrical switch is mounted to the brake lever. A bicycle shift control device according to the preamble of claim 1 is known from European Patent Application No. 1 588 922. This document disclosed several different bicycle shift control devices with each thereof comprising different operating members. For example, one shift control device comprises a base member which is attached to the bicycle handlebar and an electrical switch with a housing and a cover element as well as switch operating members. The cover element has a T-shaped configuration and can be slid into a recess of the base member and fixed by a bolt.

However, these electrical shift control devices do not provide for any type of adjustment or the like to change a relative mounting location of a switch operating member of the switch relative to a base member of shift control device. Thus, the location of the switch operating member of the switch may not be optimal for all riders.

In view of the above, it will be apparent to those skilled in the art from this disclosure that there exists a need for an improved bicycle shift control device. This invention addresses this need in the art as well as other needs, which will become apparent to those skilled in the art from this disclosure.

### SUMMARY OF THE INVENTION

One object of the present invention is to provide a bicycle control device having an electrical switch in which a relative mounting location of a switch operating member of the switch relative to a base member of shift control device can be adjusted.

Another object of the present invention is to provide a bicycle control device having an electrical switch which can accommodate different rider's hand sizes and/or shifting preferences.

The foregoing objects can basically be attained by providing a bicycle control device that basically comprises a base member, an electrical switch and a plurality of switch operating members with differently shaped rider operating portions. The base member is configured to be attached to a bicycle. The switch operating members are configured to be selectively mounted one at a time on the bicycle control device. The electrical switch includes a housing with a pivoting portion to which one of the switch operating members is selectively mounted to pivot about a pivot axis of the pivoting portion between a rest position and an activation position.

These and other objects, features, aspects and advantages of the present invention will become apparent to those skilled in the art from the following detailed descriptions, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of bicycle equipped with a pair of bicycle control (brake/shift) devices (only one shown) coupled to a drop type handlebar in accordance with a preferred embodiment of the present invention;

Figure 2 is a side elevational view of one of the bicycle control (brake/shift) devices in accordance with the present invention;

Figure 3 is a front elevational view of the bicycle control (brake/shift) device illustrated in Figure 2 in accordance with the present invention;

Figure 4 is a rear elevational view of the bicycle control (brake/shift) device illustrated in Figures 2 and 3 in accordance with the present invention;

Figure 5 is a cross sectional view of the bicycle control device illustrated in illustrated in Figures 2-4 in accordance with the present invention as seen along section line 5-5 of Figure 3;

Figure 6 is an enlarged, partial rear elevational view of the brake lever and the electrical shift switch with a first one of the switch operating members mounted to the control shaft of the electrical shift switch;

Figure 7 is an enlarged, partial cross sectional view of the brake lever with the electrical shift switch shown in elevation;

Figure 8 is an enlarged, partial rear elevational view of the brake lever and the electrical shift switch with a second one of the switch operating members mounted to the control shaft of the electrical shift switch;

Figure 9 is an enlarged, partial rear elevational view of the brake lever and the electrical shift switch with a third one of the switch operating members mounted to the control shaft of the electrical shift switch; and

Figure 10 is a side elevational view of a bicycle control (brake/shift) device having a pivotally mounted switch operating member in accordance with an alternate embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

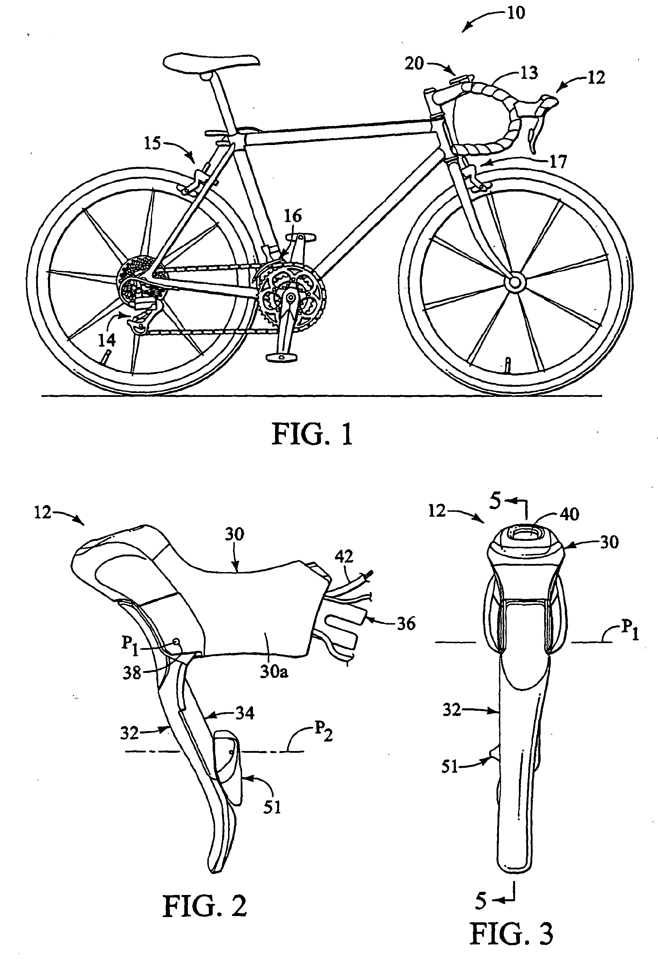

Referring initially to Figure 1, a bicycle 10 is illustrated with a pair of control devices 12 (only one shown in Figure 1) mounted in a drop type bicycle handlebar 13 in accordance with one embodiment of the present invention. One of the control devices 12 is operatively coupled to a rear electronic derailleur 14 and a rear braking device 15, while the control device 12 is operatively coupled to a front electronic derailleur 16 and a front braking device 17. The right and left hand side control devices 12 are essentially identical in construction and operation, except that they are mirror images. Thus, only one of the control devices 12 will be discussed and illustrated herein.

Since the parts of the bicycle 10 are well known in the art, the parts of the bicycle 10 will not be discussed or illustrated in detail herein, except for the parts relating to the control devices 12 of the present invention. Moreover, various conventional bicycle parts such as brakes, derailleurs, additional sprocket, etc., which are not illustrated and/or discussed in detail herein, can be used in conjunction with the present invention.

Preferably, a cycle computer 20 is operatively coupled between the control devices 12 and the rear and front electronic derailleurs 14 and 16. Alternatively, the cycle computer 20 can be eliminated such that the control devices 12 are directly electrically coupled to the rear and front electronic derailleurs 14 and 16. In such a case, each of the control devices 12 includes its own built in cycle computer. Also, the bicycle 10 is preferably provided with a generator such as a hub dynamo, and a battery which can be located in a portion of a frame tube such as the seat tube of the bicycle 10. The generator and the battery are electrically coupled to the control devices 12 and the rear and front electronic derailleurs 14 and 16 in a conventional manner.

As best seen in Figure 2, the bicycle control device 12 basically comprises a lever bracket or base member 30, a control or brake lever 32 movably coupled to the base member 30 about a pivot axis P₁ and an electrical shift switch 34 mounted on the brake lever 32. The base member 30 is mounted to the bicycle handlebar 13 by a conventional tube clamp 36 that is attached to the rear end of the base member 30. The tube clamp 36 is a conventional metal clamp and will not be discussed and/or illustrated in detail herein.

As seen in Figures 2-5, the base member 30 is configured as a rider hand grip part or drop handlebar bracket body 30a having a first end with a handlebar mounting structure for mounting to the drop type handlebar 13 and a second end pivotally supporting the brake lever 32. Thus, the base member 30 has a generally rectangular transverse cross section with rounded corner such that the drop handlebar bracket body 30a includes an upper wall, a bottom wall and a pair of sidewalls. The tube clamp 36 is attached to the first end of the drop handlebar bracket body 30a for mounting to the drop type handlebar 13. The second end of the drop handlebar bracket body 30a pivotally supports the brake lever 32 by a pivot pin 38. Preferably, the base member 30 has a pair of flanges that the brake lever 32 is located between. In the illustrated embodiment, the base member 30 has an electrical unit 40 that is electrically coupled to the electrical shift switch 34 and selectively wired to the cycle computer 20 and/or one of the rear and front electronic derailleurs 14 and 16.

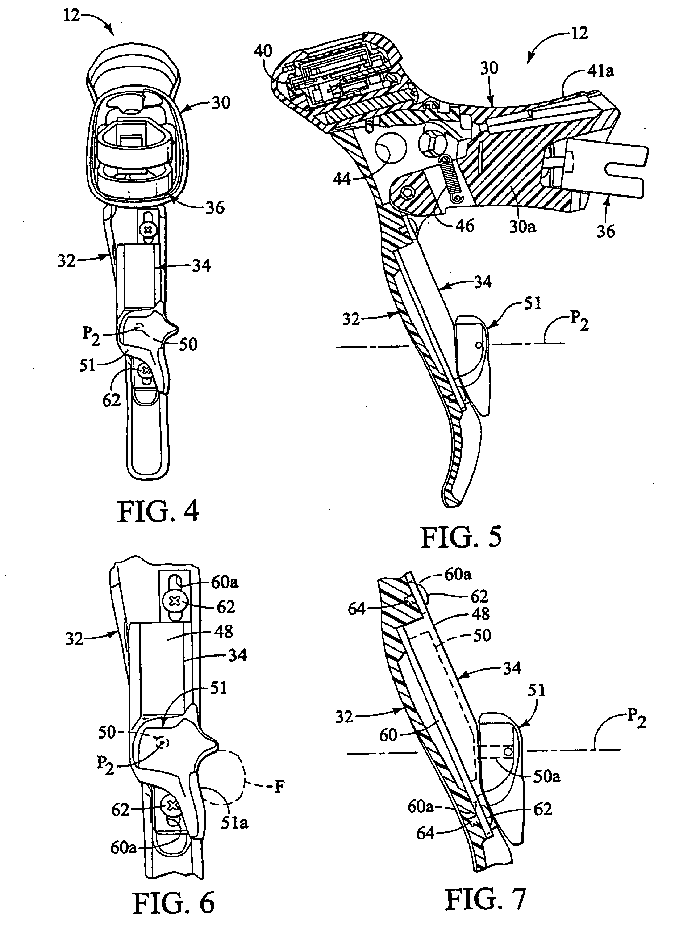

As best seen in Figure 5, the brake lever 32 is a cable operated brake lever that is pivotally mounted to the base member 30 for performing a bicycle braking operation. In other words, the brake lever 32 is attached to a brake cable 42 to operate one of the braking devices 15 and 17. In this illustrated embodiment, the electrical shift switch 34 is fixedly coupled to the control lever 32 to move therewith.

As seen in Figure 5, the brake lever 32 has a first end pivotally attached to the base member 30 and a second free end spaced longitudinally from the first end of the brake lever 32, with the electrical shift switch 34 mounted to the brake lever 32. More specifically, the brake lever 32 has a pair of axially aligned openings 44 that receive an end barrel or fitting of the brake cable 42. In other words, the aligned openings 44 of the control lever 32 form a cable attachment structure for the brake cable 42. Thus, the control lever 32 is a cable operated brake lever that is pivotally mounted to the base member 30 for performing a bicycle braking operation. A return spring 46 is operatively coupled between the brake lever 32 and the base member 30 to bias the brake lever 32 to a rest position. The return spring 46 is preferably a coil tension spring that is elongated when the brake lever 32 is moved from the rest position to a braking position. Of course, it will be apparent to those skilled in the art from this disclosure that the brake lever 32 can be replaced with a dual action control (shifting/braking) lever that is configured and arranged as both a brake lever and a shift lever for both braking operations and gear shifting operations.

Referring to Figures 6, 8 and 9, the electrical shift switch 34 has a switch housing 48 that encloses an electrical contact arrangement 50 and a plurality of switch operating members 51, 52 and 53. The electrical contact arrangement 50 is provided with a pivoting portion or control shaft 50a that operates the electrical shift switch 34 in a conventional manner. The configuration of the electrical contact arrangement 50 can be any type of arrangement that can carry out the present invention, and thus, the electrical contact arrangement 50 will not be discussed and/ illustrated in detail herein. In any event, the switch operating members 51, 52 and 53 are selectively mounted one at a time to the control shaft 50a. The switch operating members 51, 52 and 53 that is mounted on the control shaft 50a can then pivot about a pivot axis P₂ of the control shaft 50a between a rest position and an activation position to perform a shifting operation.

The switch operating members 51, 52 and 53 are configured to be selectively mounted one at a time on the control shaft 50a accommodate different rider's hand sizes and/or shifting preferences. A rider's finger F is shown in phantom lines in Figures 6, 8 and 9 to illustrate the relative positions of the rider's finger F relative to the pivot axis P₂ of the control shaft 50a. The switch operating member 51 is provided with a rider operating portion 51 a. The switch operating member 52 is provided with a rider operating portion 52a. The switch operating member 53 is provided with a rider operating portion 53a. These rider operating portions 51a, 52a and 53a are configured and arranged such that when the switch operating members 51, 52 and 53 are selectively mounted to the control shaft 50a, the rider operating portions 51a, 52a and 53a will be located at different relative distances from the base member 30. In other words, each of the rider operating portions 51a, 52a and 53a is a rider engagement projection that is arranged to be located at a different relative location as determined relative to a longitudinal axis of the brake lever 32 when each of the switch operating members 51, 52 and 53 is selectively mounted to the control shaft 50a of the electrical switch 34. Thus, each of the rider operating portions 51a, 52a and 53a has a different operating location along the length of the brake lever 32. With this arrangement, the rider can easily change a relative distance between the base member 30 and the rider operating portion by change the rider operating portions 51a, 52a and 53a. While only three different switch operating members 51, 52 and 53 are illustrated, it will be apparent to those skilled in the art from this disclosure that additional switch operating members can be provided to provide more options to the rider. These different switch operating members 51, 52 and 53 can all be included as part of a kit with the bicycle control device 12 and/or can a separately purchased accessory for the bicycle control device 12.

As seen in Figure 6, the rider operating portion 51a of the switch operating member 51 is a rider engagement projection that slightly projects outwardly past a side edge of the brake lever 32. The rider operating portion 51a of the switch operating member 51 is arranged to be located between the pivot axis P₂ of the control shaft 50a and the second or free end of the brake lever 32 as determined relative to a longitudinal axis of the brake lever 32 when of the switch operating member 51a is mounted to the control shaft 50a (i.e., the pivoting portion) of the electrical switch 34.

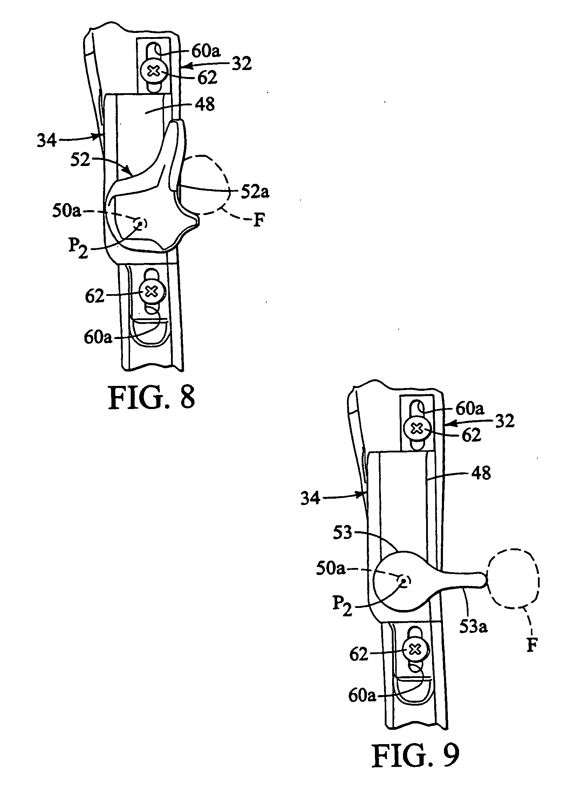

As seen in Figure 8, the rider operating portion 52a of the switch operating member 52 is a rider engagement projection that slightly projects outwardly past a side edge of the brake lever 32. The rider operating portion 52a of the switch operating member 52 is arranged to be located between the pivot axis P₂ of the control shaft 50a and the first (pivotally supported) end of the brake lever 32 as determined relative to a longitudinal axis of the brake lever 32 when of the switch operating member 52a is mounted to the control shaft 50a (i.e., the pivoting portion) of the electrical switch 34.

As seen in Figure 9, the rider operating portion 53a of the switch operating member 53 is a rider engagement projection that slightly projects outwardly past a side edge of the brake lever 32. The rider operating portion 53a of the switch operating member 53 is arranged to be aligned with the pivot axis P₂ of the control shaft 50a and the first (pivotally supported) end of the brake lever 32 as determined relative to a longitudinal axis of the brake lever 32 when the switch operating member 53a is mounted to the control shaft 50a (i.e., the pivoting portion) of the electrical switch 34.

Moreover, as seen in Figures 6-9, the electrical shift switch 34 is adjustably mounted to the brake lever 32 to be mounted at a plurality of mounting locations along the length of the brake lever 32 to change a relative distance between the base member 30 and one of the rider operating portions 51a, 52a or 53a that is currently mounted to the control shaft 50a. In particular, the electrical shift switch 34 is adjustably mounted to the brake lever 32 by a mounting arrangement that is configured to selectively secure the electrical shift switch 34 in at least two different mounting locations on the brake (control) lever 32. The mounting arrangement of the electrical switch 34 includes a housing mounting member 60 having a pair of elongated slots 60a and a pair of fasteners 62. The fasteners 62 extend through the slots 60a to interconnect the electrical shift switch 34 to the brake lever 32 with the slots 60a being arranged to change a relative distance between the base member 30 and the electrical shift switch 34 as measured along the brake lever 32 from the first (pivotally supported) end of the brake lever 32. The fasteners 62 are preferably screws that are threaded into a pair of threaded holes 64 of the brake lever 32.

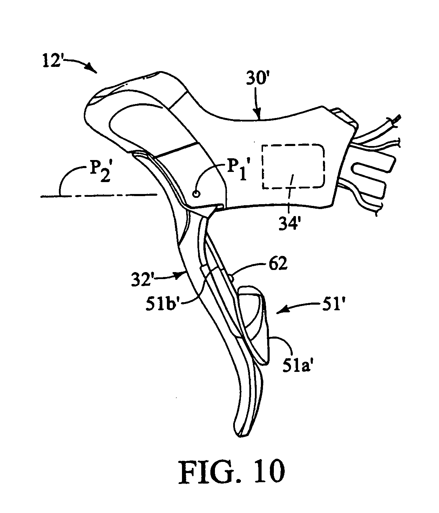

Alternatively, as seen in Figure 10, the present invention can be applied to a bicycle control device 12' in which a lever bracket or base member 30' is provided with a pivotally mounted control (brake/shift) lever 32', an internal electrical shift switch 34' and a pivotally mounted switch operating member 51'. The control lever 32' is movably coupled to the base member 30' to pivot about a pivot axis P₁' to perform a braking operation and the switch operating member 51' is movably coupled to the base member 30' to pivot about a pivot axis P₂' to perform a shifting operation. The switch operating member 51' has a rider operating portion 51a' mounted on a lever portion 51 b'. The rider operating portion 51a' is configured and arranged can be adjusted relative to the base member 30' using a single one of the fasteners or screws 62. More specifically, one of the rider operating portion 51a' and the lever portion 51b' is provided with a slot (not shown) that receives the one of the screws 62 for adjusting the rider operating portion 51a' at one of a plurality of different locations as determined relative to a longitudinal axis of the control lever 32'. It should also be noted that it will be apparent to those skilled in the art from this disclosure that differently shaped rider operating portions (not shown) can be selectively mounted on the lever portion 51 b' to effectively change the location of a rider engagement projection of the rider operating portion.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle shift control device (12) comprising:
a base member (30; 30') configured to be attached to a bicycle (10); and
an electrical switch (34); a plurality of switch operating members (51, 52, 53) with differently shaped rider operating portions (51a, 52a, 53a), the plurality of switch operating members (51, 52, 53) being configured to be selectively mounted one at a time on the bicycle shift control device (12), **characterized in that**
the electrical switch (34) includes a housing (48) with a pivoting portion (50a) to which one of the switch operating members (51, 52, 53) is selectively mounted to pivot about a pivot axis (P2) of the pivoting portion (50a) between a rest position and an activation position.

2. The bicycle shift control device (12) according to claim 1, further comprising
a control lever (32) having a first end pivotally attached to the base member (30; 30') and a second free end spaced longitudinally from the first end of the control lever (32), with the electrical switch (34) mounted to the control lever (32).

3. The bicycle shift control device (12) according to claim 2, wherein
each of the switch operating members(51, 52, 53) includes a rider engagement projection (51a, 52a, 53a) that is arranged to be located at a different relative location as determined relative to a longitudinal axis of the control lever (32) when each of the switch operating members (51, 52, 53) is selectively mounted to the pivoting portion (50a) of the electrical switch (34).

4. The bicycle shift control device (12) according to claim 3, wherein
the rider engagement projection (51a, 52a, 53a) of each of the switch operating members (51, 52, 53) projects outwardly past a side edge of the control lever (32).

5. The bicycle shift control device (12) according to claim 2, wherein
one of the switch operating members (51, 52, 53) includes a rider engagement projection that is arranged to be located between the pivot axis (P2) of the pivoting portion (50a) and the first end or the second end of the control lever (32) as determined relative to a longitudinal axis of the control lever (32) when the one (52) of the switch operating members (51, 52, 53) is mounted to the pivoting portion (50a) of the electrical switch (34).

6. The bicycle shift control device (12) according to claim 2, wherein
one of the switch operating members (51, 52, 53) includes a rider engagement projection that is arranged to be aligned with the pivot axis (P2) of the pivoting portion (50a) as determined relative to a longitudinal axis of the control lever (32) when the one (53) of the switch operating members (51, 52, 53) is mounted to the pivoting portion (50a) of the electrical switch (34).

7. The bicycle shift control device (12) according to claim 6, wherein
second one (52) of the switch operating members (51, 52, 53) includes a rider engagement projection that is arranged to be located between the pivot axis (P2) of the pivoting portion (50a) and the first end of the control lever (32) as determined relative to a longitudinal axis of the control lever (32) when the second one (52) of the switch operating members (51, 52, 53) is mounted to the pivoting portion (50a) of the electrical switch (34).

8. The bicycle shift control device (12) according to claim 7, wherein
third one of the switch operating members (51, 52, 53) includes a rider engagement projection that is arranged to be located between the pivot axis (P2) of the pivoting portion (50a) and the second end of the control lever (32) as determined relative to a longitudinal axis of the control lever (32) when the third one of the switch operating members (51, 52, 53) is mounted to the pivoting portion (50a) of the electrical switch (34).

9. The bicycle shift control device (12) according to claim 8, wherein
second of the switch operating members (51, 52, 53) includes a rider engagement projection that is arranged to be located between the pivot axis (P2) of the pivoting portion (50a) and the second end of the control lever (32) as determined relative to a longitudinal axis of the control lever (32) when the second of the switch operating members (51, 52, 53) is mounted to the pivoting portion (50a) of the electrical switch (34).

## Patentansprüche

1. Fahlradschaltungssteuervorrichtung (12), umfassend:
ein Basiselement (30; 30'), konfiguriert um an einem Fahrrad (10) befestigt zu werden; einen elektrischen Schalter (34); und eine Vielzahl von Schaltbetätigungselementen (51, 52, 53), mit unterschiedlich geformten Fahrerbetätigungsabschnitten (51a, 52a, 53a), wobei die Vielzahl an Schaltbetätigungselementen (51, 52, 53) konfiguriert ist um jeweils selektiv an der Fahrradschaltungssteuervorrichtung (12) montiert zu werden, **dadurch gekennzeichnet, das** der elektrische Schalter (34) ein Gehäuse (48) mit einem Schwenkabschnitt (50a) enthält, bezüglich welchem eines der Schaltbetätigungselemente (51, 52, 53) selektiv montiert ist, zum schwenken bezügliche einer Schwenkachse (P2) des Schwenkabschnittes (50a) zwischen einer Ruheposition und einer Aktivierungsposition.

2. Fahlradschaltungssteuervörrichtung (12) gemäß Anspruch 1, ferner umfassend einen Steuerhebel (32) mit einem ersten Ende schwenkbar befestigt bezüglich des Basiselementes (30; 30') und einem zweiten freien Ende, in Längsrichtung beabstandet von dem ersten Ende des Steuerhebels (32), wobei der elektrische Schalter (34) an dem Steuerhebel (32) montiert ist.

3. Fahlradschaltungssteuervorrichtung (12) nach Anspruch 2, bei welcher jedes der Schaltbetätigungselemente (51, 52, 53) einen Fahrereingriffsvorsprung (51a, 52a, 53a) enthält, angeordnet um befindlich zu sein an einem unterschiedlichen relativen Ort, wie bestimmt mit Bezug auf eine Längsachse des Steuerhebels (32), wenn jedes der Schaltbetätigungselemente (51, 52, 53) selektiv montiert an dem Schwenkabschnitt (50a) des elektrischen Schalters (34) ist.

4. Fahlradschaltungssteuervorrichtung (12) nach Anspruch 3, bei welcher der Fahrereingriffsvorsprung (51a, 52a, 53a) von jedem der Schaltbetätigungselemente (51, 52, 53) nach außen vorspringt über eine Seitenkante des Steuerhebels (32) hinaus.

5. Fahlradschaltungssteuervorrichtung (12) nach Anspruch 2, bei welcher eines der Schaltbetätigungselemente (51, 52, 53) einen Fahrereingriffsvorsprung enthält, welcher angeordnet ist um befindlich zu sein zwischen der Schwenkachse (P2) des Schwenkabschnittes (50a), und dem ersten Ende oder dem zweitem Ende des Steuerhebels (32), wie die bestimmt relativ zu einer Längsachse des Steuerhebels (32), wenn das eine (52) der Schaltbetätigungselemente (51, 52, 53) an dem Schwenkabschnitt (50a) des elektrischen Schalters (34) montiert ist.

6. Fahlradschaltungssteuervorrichtung (12) nach Anspruch 2, bei welcher eines der Schaltbetätigungselemente (51, 52, 53) einen Fahrereingriffsvorsprung enthält, welcher angeordnet ist um ausgerichtet vorzuliegen bezüglich der Schwenkachse (P2) des Schwenkabschnittes (50a), wie bestimmt relativ zu einer Längsachse des Steuerhebels (32), wenn das eine (53) der Schaltbetätigungselemente (51, 52, 53) an dem Schwenkabschnitt (50a) des elektrischen Schalters (34) montiert ist.

7. Fahlradschaltungssteuervorrichtung (12) nach Anspruch 6, bei welcher ein zweites (52) der Schaltbetätigungselemente (51, 52, 53) einen Fahrereingriffsvorsprung enthält, welcher angeordnet ist um befindlich zu sein zwischen der Schwenkachse (P2) des Schwenkabschnittes (50a) und dem ersten Ende des Steuerhebels (32), wie bestimmt relativ zu einer Längsachse des Steuerhebels (32), wenn das zweite (52) der Schaltbetätigungselemente (51, 52, 53) an dem Schwenkabschnitt (50a) des elektrischen Schalters (34) montiert ist.

8. Fahlradschaltungssteuervorrichtung (12) nach Anspruch 7, bei welcher ein drittes der Schaltbetätigungselemente (51, 52, 53) einen Fahrereingriffsvorsprung enthält, welcher angeordnet ist um befindlich zu sein zwischen der Schwenkachse (P2) des Schwenkabschnittes (50a) und dem zweiten Ende des Steuerhebels (32), wie bestimmt relativ zu einer Längsachse des Steuerhebels (32), wenn das dritte der Schaltbetätigungselemente (51, 52, 53) an dem Schwenkabschnitt (50a) des elektrischen Schalters (34) montiert ist.

9. Fahlradschaltungssteuervorrichtung (12) nach Anspruch 8, bei welcher ein zweites der Schaltbetätigungselemente (51, 52, 53) einen Fahrereingriffsvorsprung enthält, welcher angeordnet ist um befindlich zu sein zwischen der Schwenkachse (P2) des Schwenkabschnittes (50a) und dem zweiten Ende des Steuerhebels (32), wie bestimmt relativ oder mit Bezug zu einer Längsachse des Steuerhebels (32), wenn das zweite der Schaltbetätigungselemente (51, 52, 53) an dem Schwenkabschnitt (50a) des elektrischen Schalters (34) montiert ist.

## Revendications

1. Dispositif de commande de changement de vitesse de bicyclette (12) comprenant :
un élément de base (30 ; 30') configuré pour être attaché à une bicyclette (10) ; et
un commutateur électrique (34) ;
une pluralité d'éléments d'actionnement de commutateur (51, 52, 53) avec des parties d'actionnement pour le cycliste de formes différentes (51a, 52a, 53a), la pluralité d'éléments d'actionnement de commutateur (51, 52, 53) étant configurée pour être montée, un à la fois, sur le dispositif de commande de changement de vitesse de bicyclette (12), **caractérisé en ce que**
le commutateur électrique (34) comprend un boîtier (48) avec une partie pivotante (50a) à laquelle l'un des éléments d'actionnement de commutateur (51, 52, 53) est sélectivement monté, pour pivoter autour d'un axe pivot (P2) de la partie pivotante (50a) entre une position de repos et une position d'actionnement.

2. Dispositif de commande de changement de vitesse de bicyclette (12) selon la revendication 1, comprenant, en outre, un levier de commande (32) ayant une première extrémité attachée pivotante à l'élément de base (30 ; 30') et une seconde extrémité libre espacée longitudinalement de la première extrémité du levier de commande (32), le commutateur électrique (34) étant monté au levier de commande (32).

3. Dispositif de commande de changement de vitesse de bicyclette (12) selon la revendication 2, dans lequel chacun des éléments d'actionnement de commutateur (51, 52, 53) comprend une projection de prise pour le cycliste (51a, 52a, 53a) qui est agencée pour être située à un emplacement relatif différent, tel que déterminé relativement à un axe longitudinal du levier de commande (32), lorsque chacun des éléments d'actionnement de commutateur (51, 52, 53) est sélectivement monté à la partie pivotante (50a) du commutateur électrique (34).

4. Dispositif de commande de changement de vitesse de bicyclette (12) selon la revendication 3, dans lequel la projection de prise pour le cycliste (51a, 52a, 53a) de chacun des éléments d'actionnement de commutateur (51, 52, 53) projette extérieurement au-delà d'une arête latérale du levier de commande (32).

5. Dispositif de commande de changement de vitesse de bicyclette (12) selon la revendication 2, dans lequel l'un des éléments d'actionnement de commutateur (51, 52, 53) comprend une projection de prise pour le cycliste qui est agencée pour être située entre l'axe pivot (P2) de la partie pivotante (50a) et la première extrémité ou la seconde extrémité du levier de commande (32), tel que déterminé relativement à un axe longitudinal du levier de commande (32) lorsque ledit un (52) des éléments d'actionnement de commutateur (51. 52. 53) est monté à la partie pivotante (50a) du commutateur électrique (34).

6. Dispositif de commande de changement de vitesse de bicyclette (12) selon la revendication 2, dans lequel l'un des éléments d'actionnement de commutateur (51, 52, 53) comprend une projection de prise pour le cycliste qui est agencée pour être alignée avec l'axe pivot (P2) de la partie pivotante (50a), tel que déterminé relativement à un axe longitudinal du levier de commande lorsque l'un (53) des éléments d'actionnement de commutateur (51, 52, 53) est monté à la partie pivotante (50a) du commutateur électrique (34).

7. Dispositif de commande de changement de vitesse de bicyclette (12) selon la revendication 6, dans lequel un deuxième (52) des éléments d'actionnement de commutateur (51, 52, 53) comprend une projection de prise pour le cycliste, qui est agencée pour être située entre l'axe pivot (P2) de la partie pivotante (50a) et la première extrémité du levier de commande (32), tel que déterminé relativement à un axe longitudinal du levier de commande (32), lorsque le deuxième (52) des éléments d'actionnement de commutateur (51, 52, 53) est monté à la partie pivotante(50a) du commutateur électrique (34).

8. Dispositif de commande de changement de vitesse de bicyclette selon la revendication 7, dans lequel un troisième des éléments d'actionnement de commutateur (51, 52, 53) comprend une projection de prise pour le cycliste, qui est agencée pour être située entre l'axe pivot (P2) de la partie pivotante (50a) et la seconde extrémité du levier de commande (32), tel que déterminé relativement à un axe longitudinal du levier de commande (32), lorsque le troisième (52) des éléments d'actionnement de commutateur (51, 52, 53) est monté à la partie pivotante (50a) du commutateur électrique (34).

9. Dispositif de commande de changement de vitesse de bicyclette (12) selon la revendication 8, dans lequel un deuxième des éléments d'actionnement du commutateur (51, 52, 53) comprend une projection d'engrènement qui est prévue pour être située entre l'axe pivot (P2) de la partie pivotante (50a) et la deuxième extrémité du levier de commande (32), tel que déterminé relativement à un axe longitudinal du levier de commande (32), lorsque le deuxième des éléments d'actionnement du commutateur (51, 52, 53) est monté à la partie pivotante (50a) du commutateur électrique (34).
